# EUROPEAN PATENT APPLICATION

(11) **EP 4 451 195 A1**
(43) Date of publication of application: **23.10.2024**
(21) Application number: 23461562.3
(22) Date of filing: 20.04.2023
(51) Int. Cl.: G06Q 30/0201, G06Q 30/0283

(54) **METHOD OF DETERMINING THE AREA OF HIGH-PRICED LAND INTENDED FOR HIGH INTENSITY DEVELOPMENT LOCATED IN AN URBANIZED ZONE WITH CONCENTRIC SPATIAL LAYOUT AND THE MAP OBTAINED BY THIS METHOD AND ITS APPLICATION**

(71) Applicant: Uniwersytet Rolniczy im. Hugona Kollataja w Krakowie, 31-120 Krakow (PL)
(72) Inventor: Bitner-Fialkowska, Agnieszka, 01-006 Warszawa (PL); Bozek, Piotr, 43-346 Bielsko-Biala (PL)
(74) Representative: Czarnik, Maciej

(57) **Abstract**

A method for determining an area with high land prices intended for high-density residential developments located in an urbanized zone with a concentric spatial system, particularly in a city, includes the following steps: a) determining the center of an urbanized zone on a cadastral map, b) determining rings concentrically located around the center of the urbanized zone on the cadastral map, the rings having increasing radii, the width of the consecutive rings being not greater than 400 m, c) assigning cadastral parcels to the individual rings, particularly by including in a given ring cadastral parcels whose centroids are located in it, d) determining the distributions of the areas of the cadastral parcels in the individual circles created from the rings, excluding public utility parcels greater than 12 hectares in area, and then presenting the distributions on loglog plots, e) fitting a regression line to the points forming the tails of the distributions of the areas of the cadastral parcels obtained in step (d) for the arguments for which the distribution function takes values below the last maximum, the values of the function being multiplied by the arguments, (f) determining the circle with the smallest radius, in which the sum of the vertical deviations of the values of the points forming the tails of the distributions from the fitted regression straight line from step (e) is greater than 0.The invention includes also the map obtained using this method and its uses.

## Description

The invention relates to a computer-implemented method for determining an area with high land prices intended for high-density residential developments located in an urbanized zone with a concentric spatial system, particularly in a city. The boundaries of such area can be delimitated with an accuracy of 200 m. This method can be used to determine whether a land property is located within an area with high land prices and/or high service intensity. In another aspect, the present invention relates to maps obtained using the above mentioned method and the uses of such maps.

The closest prior art to the invention is a method of analyzing cadastral maps in land management called the morphology of the land parcel mosaic, which consists in a morphological analysis of the pattern formed by the boundaries of cadastral parcels carried out at a large spatial scale (Bitner, 2015; Fialkowski & Bitner, 2008). By using this method it has been shown that there are only three morphological classes of parcel patterns on the surface of the earth, which are named: (I) city core, (II) suburbs, and (III) rural areas. The morphological classes of the parcel pattern were determined based on the type of the distribution function of the cadastral parcel areas. The area with the highest level of urbanization was determined, that is, the delimitation of the city core was carried out with an accuracy of 500 m or 1000 m depending on a city. The area of the city core was compared with a cartogram of unit transaction prices of premises intended for residential purposes. A geodesic precinct was the basic unit for which the average price was determined. The highest property prices were recorded in the city core area. A city zone is one of property attributes in the valuation process. An objective delimitation of the central zone of a city, that is the city core, simplifies the valuation process and provides information that can contribute to better land management. The prior art did not disclose the relationship between morphological classes of the parcel pattern and land prices. Compared with the prior art, the present invention allows for assigning a given land property to an area with the highest land prices based only on the morphological analysis of land.

Also, using the analysis of urban processes for defining specific parts of metropolitan area is known from the state of the art. The U.S. patent US10621604 B2 discloses a method for defining a metropolitan area based on a regional inter-city flow intensity measurement model. Step 1 of the method comprises determining an urban agglomeration regional range to be measured and inter-city flow associated cities. Step 2 consists in measuring, according to the previously determined associated cities, itemized regional inter-city flow intensities of each group of the associated cities, wherein five items, namely, economic flow, passenger flow, freight flow, technical flow, and information flow, are comprised. Step 3 comprises calculating, according to the itemized regional inter-city flow intensity values, integrated inter-city flow intensities and membership degrees thereof between a central city and other associated cities. The above data are recorded into an ArcGis library, and a regional inter-flow database is established through association between spatial data and table data. In step 4 four groups of naturally intermittent type clustering analysis are performed on data in the established regional inter-city flow database, and finally the range of a metropolitan area in a narrow sense and in a broad sense is determined. Using this method, city linkage intensity can be measured quantitatively and comprehensively in a multi-factor mode, accordingly defining the multi-circle range of a metropolitan area. The method for defining specific parts of metropolitan area in the above mentioned patent does not relate to the use of the analysis of the distribution of the areas of cadastral parcels.

The American patent application US2014354677 A1, on the other hand, describes an automated method for applying a visual classification scheme to map display units based on one or more known data values associated with a subset of display units. The method involves identifying a target region encompassing a plurality of display units on the map and determining whether all display units in the target region can be assigned to the same one of multiple classes based on interpolated data values obtained only for the subset of display units in the target region. If it is determined that all display units in the target region can be assigned to the same one of multiple classes, then all display units in the target region are assigned to the same one of multiple classes, and a visual indicator is assigned to each display unit in the target region based on the class to which the display unit has been assigned. The method may further include dividing the target region into multiple subdivided target regions and applying the above method to each of the subdivided target regions if all display units in the target region cannot be assigned to the same one of multiple classes based on interpolated data values obtained only for the subset of display units in the target region. This patent application does not disclose the method for the analysis that uses the distribution of the areas of cadastral parcels.

The aim of the present invention is to define a universal method for determining an area with high land prices intended for high-density residential developments located in an urbanized zone with a concentric spatial system. This method allows for a quick and objective classification of land properties in a given metropolitan area. As a result of the application of this method, it is possible to obtain information on whether a property belongs to an area with high land prices solely on the basis of the analysis of the distribution of the areas of cadastral parcels, without a time-consuming and often tedious analysis of transactional data regarding the sale of properties in a given area. The analysis is carried out in circles with increasing radii. It should be noted that data on the areas of cadastral parcels and their location are publicly available, whereas one needs to pay to access data on real estate properties, in particular on their transaction prices, and access to such data is limited.

For the purposes of this patent application, it is assumed that the phrase "an area with high land prices" means an area, in which an average unit price of land suddenly increases by at least 30% compared to an average unit price of land outside this area.

The essence of this invention is a method for determining an area with high land prices intended for high-density residential developments located in an urbanized zone with a concentric spatial system, particularly in a city, comprising the following steps:
a) determining the center of an urbanized zone on a cadastral map,
b) determining rings concentrically located around the center of the urbanized zone on the cadastral map, the rings having increasing radii, the width of the consecutive rings being not greater than 400 m,
c) assigning cadastral parcels to the individual rings, particularly by including in each ring the cadastral parcels whose centroids are enclosed in it,
d) determining the distributions of the areas of the cadastral parcels in each of the circles created from the rings, excluding public utility parcels greater than 12 hectares in area, and then presenting the distributions on log-log plots,
e) fitting a regression line to the points forming the right parts of the tails of the distributions of the areas of the cadastral parcels obtained in step (d) for the arguments for which the distribution function takes values below the last maximum, the values of the function being multiplied by the arguments,
f) determining the circle with the smallest radius, in which the sum of the vertical deviations of the values of the points forming the tails of the distributions from the fitted regression straight line from step (e) is greater than 0.

The circle with the smallest radius in step (f) is such a circle in which for the first time the significant influence of a log-normal distribution was observed.

In the method according to the invention the width of the consecutive rings in step (b) is preferably 200 m. A greaterwidth of the rings leads to a less accurate delimitation of the boundary of the central zone of an urbanized area.

In the method according to the invention, the number of cadastral parcels assigned to the individual circles created from the rings in step (d) is preferably at least 1000. A smaller number of cadastral parcels within a given circle results in problems with determining the type of distribution of the areas of cadastral parcels. It was found that if the number of cadastral parcels in each circle is at least 1000, the right amount of data is provided to determine the type of the distribution.

The method for determining an area with high land prices intended for high-density residential developments located in an urbanized zone with a concentric spatial system, particularly in a city, is preferably carried out by a computer, particularly relating to assigning cadastral parcels to the individual rings in step (c), to determining the distributions of the areas of the cadastral parcels in step (d), and to determining the sum of the vertical deviations of the values of the points forming the tails of the distributions from the fitted regression straight line from step (e).

A digital cadastral map stored on a data carrier is preferably used for the application of the aforementioned method, particularly a map with determined centroids of cadastral parcels.

In another aspect, the essence of this invention is also a map, particularly a digital one, with a delimitated area with high land prices intended for high-density residential developments located in an urbanized zone with a concentric spatial system, particularly in a city, with a concentric spatial layout, obtained by the method according to the invention.

The invention also encompasses the use of the above mentioned map for real estate appraisal, real estate transactions, urban planning and supporting decision making processes in public services, particularly when public services include services selected from: restaurant services, hotel services and retail services.

The advantage of the method being the subject of the invention is that it can be used to verify whether a land property lies within an area with high land prices without the need for time-consuming analysis of land transaction prices.

The subject of the invention is presented in an example of embodiment not limiting its scope and in figures, wherein:
- fig. 1: illustrates rings with the width of 400 m located concentrically around the center of a city, where the points on the map denote the centroids of cadastral parcels, and the asterisk denotes the center of a city,
- fig. 2: illustrates rings with the width of 400 m located concentrically around the center of a city, whose edges are the boundaries of cadastral parcels,
- fig. 3: illustrates the distributions of the areas of cadastral parcels in circles with radii of 800 m, 1200 m, 1600 m, 2000 m, 2400 m, and 2800 m; in the graph the horizontal axis shows the areas of the parcels, a, the units on the horizontal axis are m², the vertical axis shows the values of the distribution function f(a); the distributions are presented in the double logarithmic scale,
- fig. 4: illustrates the distributions of the areas of cadastral parcels in circles with radii of 800 m, 1200 m, 1600 m, 2000 m, 2400 m, and 2800 m; in the graph the horizontal axis shows the areas of the parcels, a, the units on the horizontal are m², the vertical axis, and the vertical axis is f(a)*a; the distributions are presented in the double logarithmic scale,
- fig. 5: illustrates the distribution of the areas of cadastral parcels in a circle with a radius of 2000 m, constituting the central part of city,
- fig. 6: illustrates the central part of a city marked in dark gray, delimitated using the morphology of the land parcel mosaic method, the map was created using ArcGIS,
- fig. 7: illustrates average unit prices of land located within the rings with the widths of 200 m and 400 m; the line shows the average price of land in the study area,
- fig. 8: illustrates the intensity of transactions within the rings with the width of 400 m, that is, the number of transactions per 1 km²,
- fig. 9: illustrates the percentage of the area of sold land within the area of the rings with the width of 400 m.

In an example implementation the analysis of the distribution of the areas of cadastral parcels in an urbanized zone with a concentric spatial system was carried out using the example of the city of Krakow, and the area with high land prices intended for high-density residential developments was identified, which, for the purposes of this patent application, was called the "central zone" encompassing the strict center of the city. The search for the "central zone" was limited to a part of the city, that is to a circle whose radius was 4 kilometers. For cities with a population of several million people, the search for the boundaries of this zone should be carried out using the analysis of the distributions of the areas of cadastral parcels located within a circle with a radius of over a dozen kilometers. Only cities that developed concentrically are suitable for the analysis. In the example implementation two analyses were conducted. Analysis I was a morphological analysis of the digital cadastral map of Krakow. Analysis II was the analysis of the real estate market in Krakow and it focused on the transactional prices of land properties.

### Morphological analysis of the digital cadastral map of Krakow (Analysis I)

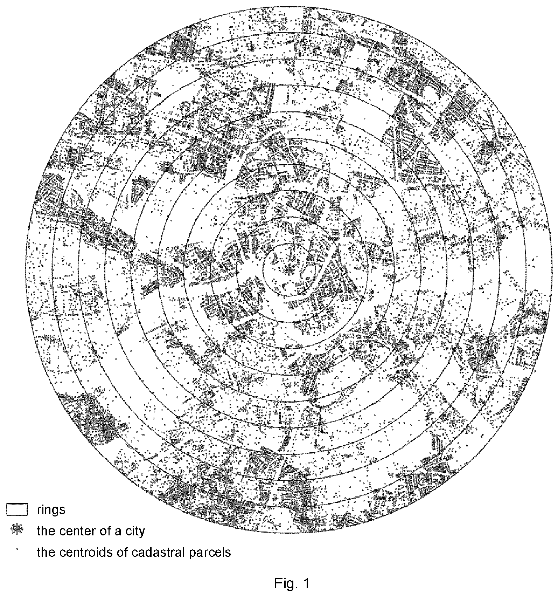

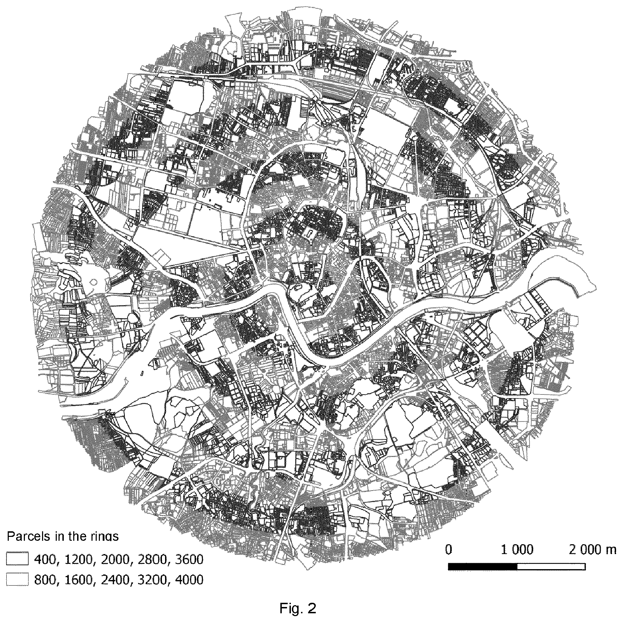

In order to carry out the morphological analysis of the digital cadastral map, it was necessary to determine the center of the city on that map. For this purpose, data from historical maps were analyzed and it was assumed that the center of the city was the centroid of the parcel on which the Wawel Royal Castle is located. Using a computer and ArcGIS software, the centroids of the parcels located within a circle with a radius of 4 km from the city center were determined. Then rings with widths of 200 m and 400 m, concentrically located around the center of the city, were determined (fig. 1), and the criterion for a parcel to belong to a ring was defined: a parcel belongs to a ring if its centroid is located within this ring. Based on the data obtained, rings were determined whose edges were the boundaries of cadastral parcels. Roads and lands under surface waters were excluded from the database. (fig. 2).

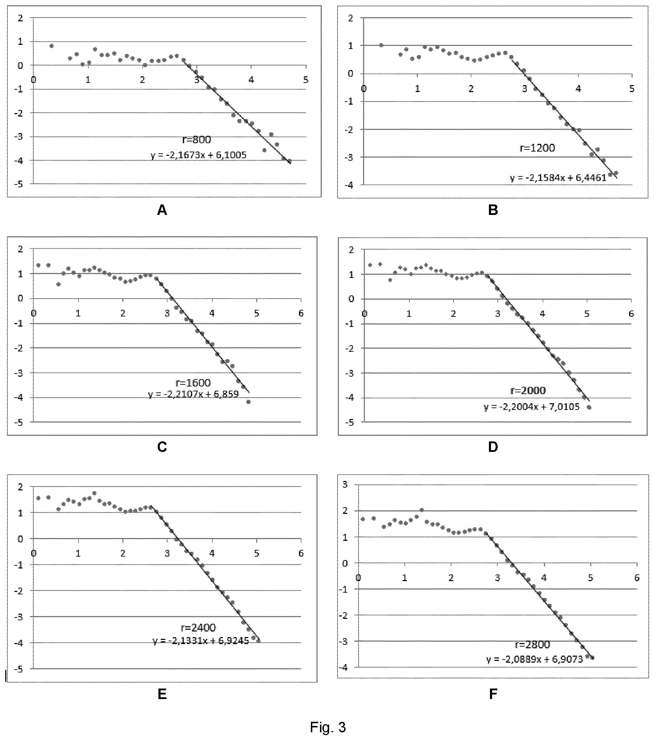

In the next step, the distributions of the areas of cadastral parcels in the circles formed by the rings were determined according to the method described by White et al. (2008), and Fialkowski and Bitner (2008). To prepare the distributions the normalized logarithmic binning method was applied. Because of a very small number of parcels with very large areas in Krakow the analysis was limited to parcels with areas smaller than 12 hectares, which are public utility parcels (parks, cemeteries, etc.). To the graphs obtained trend lines were added to the right parts of the distributions (so-called "tails of distributions") of the areas of cadastral parcels (fig. 3) using the least square method. The adopted definition of the "tail of a distribution" was used by Faldzinski (2014).

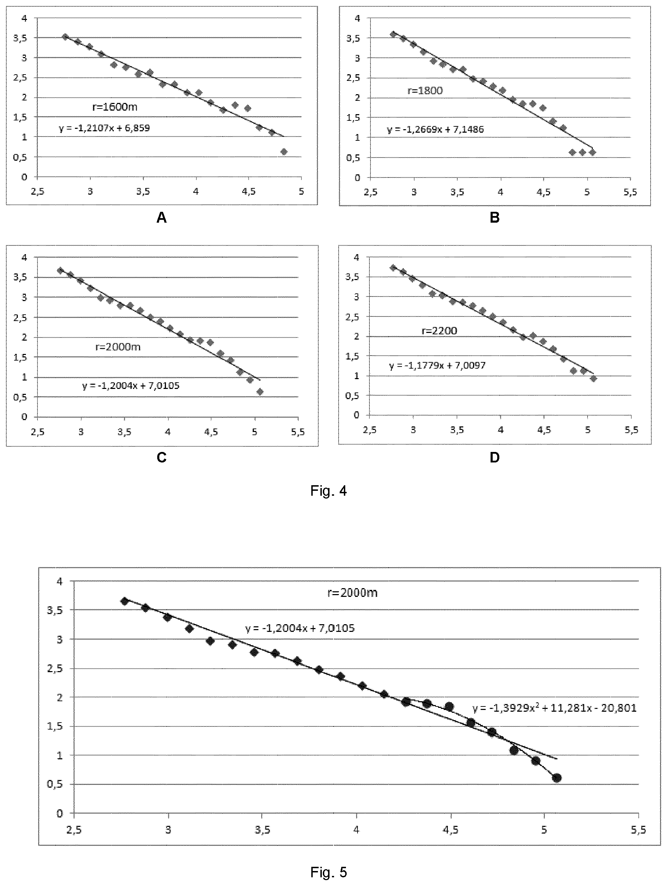

To better illustrate the effect of the log-normal distribution, that is characteristic of the suburbs, on the power law distribution, the data about the areas of cadastral parcels from the individual circles were transformed: the function values were multiplied by the arguments. The log-log plots (fig. 4) show only the right parts of the distributions. Trend lines were fitted to the data using the least square method (fig. 4). If the middle part of a plot is above the straight line, and there is a characteristic bulge at the end of the plot - as shown in fig. 5 - it indicates a significant effect of a log-normal distribution. In order to determine the radius of the city's central zone more accurately, the analysis of the distributions of the areas of cadastral parcels was carried out for rings with different widths: 200 m and 400 m. It turned out that the best results were obtained for the rings with the width of 200 m.

For the first circles, in which the effect of the log-normal distribution on the power law distribution was observed, the sums of the vertical deviations of the points on the graph from the straight line fitted to the data were determined. The circle, in which the sum of these deviations is greater than zero for the first time, determines the city's central zone, as illustrated in Table 1, that shows the sums of the vertical deviations of the points from the straight lines shown in fig. 4. for circles with radii of 1600 m, 1800 m, 2000 m, and 2200 m.

The analysis of the distribution of the areas in each ring can be conducted using a computer and MS Excel, which reduces the analysis time and allows to get results faster.

**Table 1. The sums of the vertical deviations of the points from the straight line for the data shown on the selected graphs from fig. 4**

| The radius of a circle | 1600 m | 1800 m | 2000 m | 2200 m |
|---|---|---|---|---|
| The sum of the vertical deviations from the straight line | -0,00289 | -0,00034 | 0,002097 | 0,004248 |

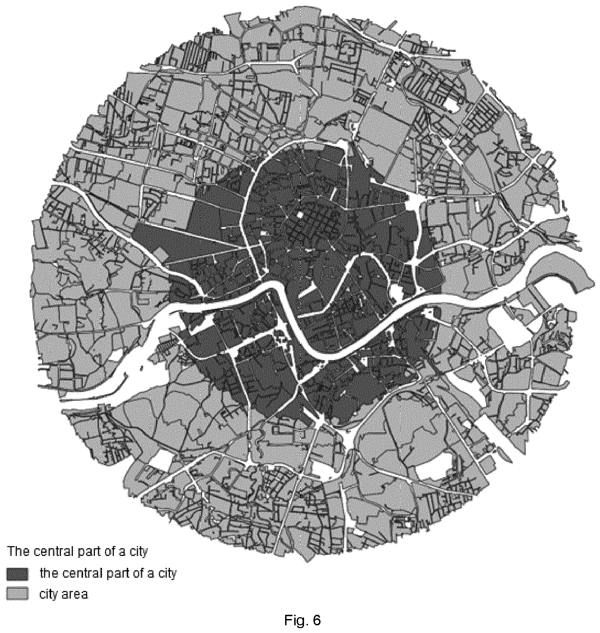

The radius of the circle in which a significant effect of a log-normal distribution on a power law distribution was first observed in the form of a concave distribution and a sum of vertical deviations greater than zero, is the radius of the city's central zone. The visualization of the city's central zone on the cadastral map is illustrated in fig. 6.

### Analysis of the real estate market in Krakow (Analysis II)

Analysis II, the real estate analysis, was conducted using a computer and the same area that was used in Analysis I. The study was limited to the area within the circle with a radius of 4 km from the city center, the boundaries of the geodesic precincts being the boundaries of that area, and a cadastral parcel being the basic unit. The transactional data covered 24 years, i.e. from January 1995 to December 2018. The analysis was limited to one land use designation: in Krakow it was land intended for high-intensity residential development.

Properties with specific characteristics, i.e. parcels with transformer stations, parcels with building permits issued, roads, parcels put into perpetual usufruct, parcels smaller than 200 m² and larger than 120,000 m², parcels sold by tender, and mortgaged parcels, were removed from the data collected.

Prices were then brought to the date of the last transaction in the database using MS Excel. Price change index was determined using a linear regression model. In the next step the transactions were marked on the cadastral map in the form of points denoting the centroids of sold properties consisting of single parcels. If properties consisted of several parcels, the transactions were marked on the map as the centers of gravity of the centroids of the individual parcels, the centers of gravity needed to belong to that property.

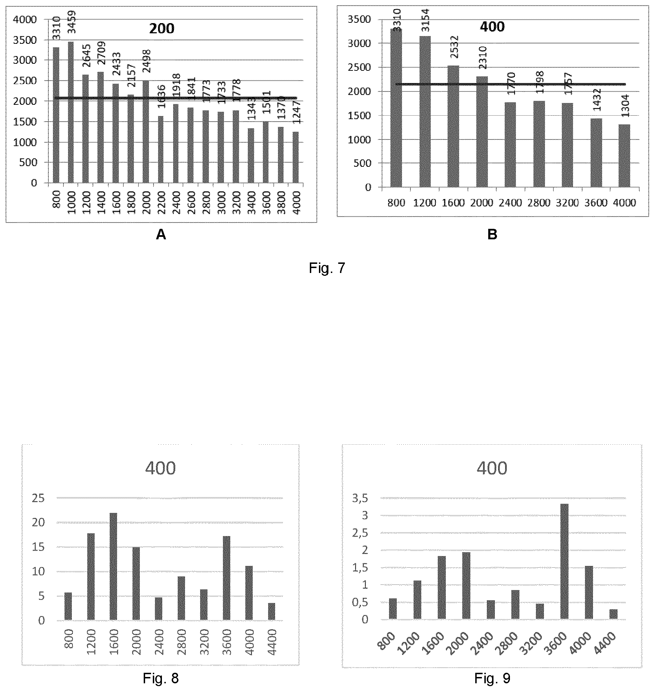

Then rings with the widths of 200 m and 400 m located concentrically around the city center were delimited. Average unit transaction prices in the individual rings were then calculated. Because of a small number of transactions, the rings closest to the city center were combined into one circle with a radius of 800 meters. Histograms were created that show average unit prices within the rings with the widths of 200 m and 400 m, depending on the distance from the determined city center (fig. 7). The thickened horizontal lines in the graphs represent average prices calculated from average prices in the individual rings.

The average price calculated from average prices in the individual rings with the width of 200 m located in the study area is 2079 PLN/m². Average prices in the rings with the width of 200 m at a distance of up to 2000 m from the city center are above 2150 PLN/m², that is they are above average. Beyond the 2000 meter mark average prices do not exceed 1920 PLN/m², that is they are below average.

The average price calculated from average prices in the individual rings with the width of 400 m located in the study area is 2151 PLN/m². Average prices in the rings with the width of 400 m at a distance of up to 2000 m from the city center are above 2310 PLN/m², that is they are above average. After crossing the mark of 2000 m from the city center average prices do not exceed 1800 PLN/m², that is they are below average.

Unexpectedly, a ring with the outer radius of 2000 m was found to be the last ring with a high level of average prices, and the distance of 2000 m is the same distance from the city center that determines the city's central zone in the Analysis I described above. After crossing the mark of 2000 m prices stabilize in several consecutive rings and stay at a similar level with a weak downward trend. To illustrate changes in average prices, Tables 2 and 3 show average prices in the rings with the widths of 200 m (Table 2) and 400 m (Table 3) and percentage changes in prices between the consecutive rings as they get closer to the city center.

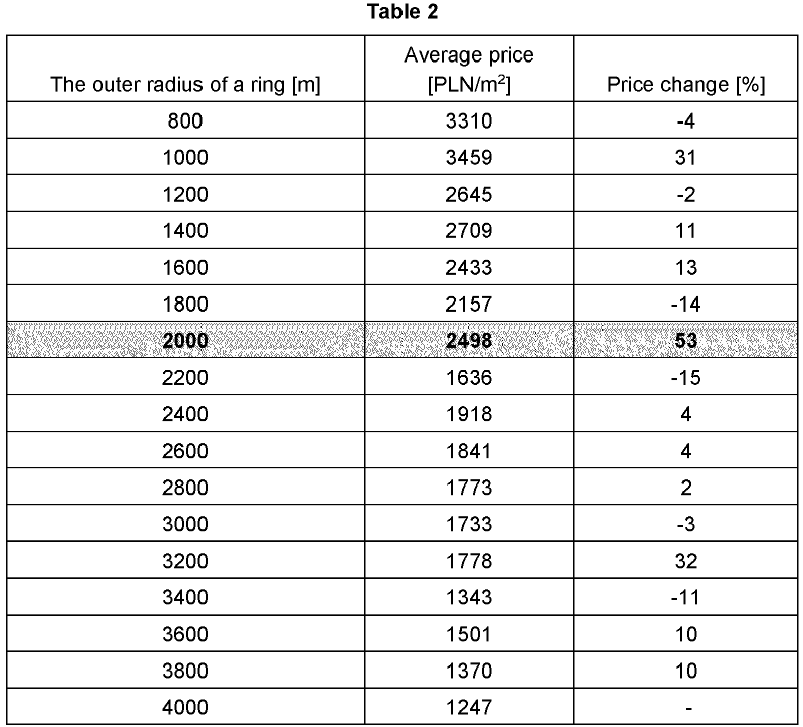

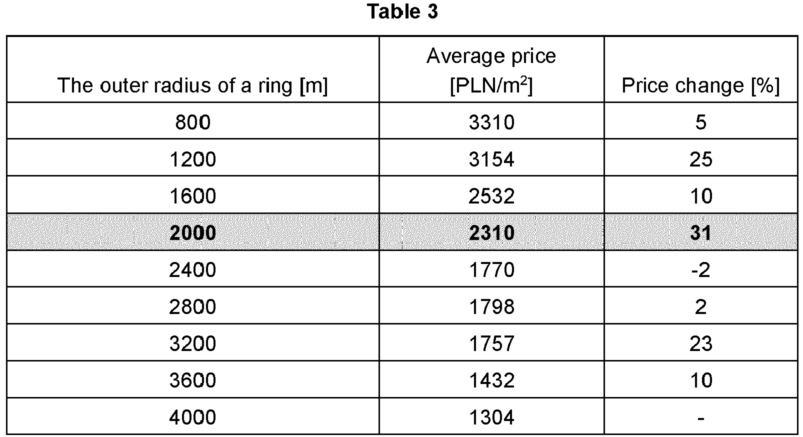

As one approaches the city center, the largest average price increase occurs between the ring with the outer radius of 2000 m and the ring immediately preceding it. These price increases are 53% and 31% for the rings with the widths of 200 m and 400 m, respectively.

The intensity of transactions within the rings with the width of 400 m was examined in terms of the number of transactions (fig. 8). Between the rings with radii of 2000 m and 2400 m there is a threefold decrease in the number of transactions per 1 km². The number of transactions per 1 km² fell from 15 to 5. The intensity of transactions within the rings with the width of 400 m was also examined in terms of the amount of sold land area (fig. 9). The percentage of land sold in the area of the entire ring was determined. Between the rings with radii of 2000 m and 2400 m there is a nearly fourfold decrease in the percentage of land sold.

### References

Bitner A (2015). Metoda morfologii mozaiki dziafek w analizach kartograficznych. Przegld Geodezyjny, 87(6), 3-11.
Faldziński M (2014). Teoria wartości ekstremalnych w ekonometrii finansowej. Wydawnictwo Naukowe Uniwersytetu Mikofaja Kopernika, Toruń.
Fialkowski M, Bitner A (2008). Universal rules for fragmentation of land by humans. Landscape Ecology, 23, 1013-1022.
White EP, Enquist BJ, Green JL (2008). On estimating the exponent of power-law frequency distributions. Ecology 89:905-912. doi:10.1890/07-1288.1.

## Claims

1. A method for determining an area with high land prices intended for high-density residential developments located in an urbanized zone with a concentric spatial system, particularly in a city, the method comprising the following steps:
a) determining the center of an urbanized zone on a cadastral map,
b) determining rings concentrically located around the center of the urbanized zone on the cadastral map, the rings having increasing radii, the width of the consecutive rings being not greater than 400 m,
c) assigning cadastral parcels to the individual rings, particularly by including in a given ring cadastral parcels whose centroids are located in it,
d) determining the distributions of the areas of the cadastral parcels in the individual circles created from the rings, excluding public utility parcels greaterthan 12 hectares in area, and then presenting the distributions on log-log plots,
e) fitting a regression line to the points forming the tails of the distributions of the areas of the cadastral parcels obtained in step (d) for the arguments for which the distribution function takes values below the last maximum, the values of the function being multiplied by the arguments,
f) determining the circle with the smallest radius, in which the sum of the vertical deviations of the values of the points forming the tails of the distributions from the fitted regression straight line from step (e) is greater than 0.

2. The method according to claim 1, **characterized in that**, the width of the consecutive rings in step (b) is 200 m.

3. The method according to claim 1, **characterized in that**, the number of the cadastral parcels assigned to the individual circles created from the rings in step d) is at least 1000.

4. The method according to any of the previous claims, **characterized in that**, it is carried out by a computer, particularly relating to assigning cadastral parcels to the individual rings in step (c), to determining the distributions of the areas of the cadastral parcels in step (d), and to determining the sum of the vertical deviations of the values of the points forming the tails of the distributions from the fitted regression straight line from step (e).

5. The method according to claim 4, **characterized in that**, additionally a digital cadastral map stored on a data carrier is used for the application of the aforementioned method, particularly a map with determined centroids of cadastral parcels.

6. A map, particularly a digital map, with a determined area with high land prices intended for high-density residential developments located in an urbanized zone, particularly in a city, with a concentric spatial system, obtained using the method specified in any of claims 1 to 5.

7. Use of the map specified in claim 6 for real estate appraisal, real estate transactions, urban planning and supporting decision making processes in public services.

8. Use according to claim 7, **characterized in that**, public services comprise services selected from: restaurant services, hotel services and retail services.
